# EUROPEAN PATENT APPLICATION

(11) **EP 4 600 852 A1**
(43) Date of publication of application: **13.08.2025**
(21) Application number: 24156088.7
(22) Date of filing: 06.02.2024
(51) Int. Cl.: G06F 21/44, G06F 21/57, G06F 21/73, G06Q 10/0875

(54) **METHOD OF VERIFYING INTEGRITY OF A COMPUTING DEVICE, AND COMPUTING DEVICE**

(71) Applicant: Siemens Aktiengesellschaft, 80333 München (DE)
(72) Inventor: Falk, Rainer, 85435 Erding (DE); Maftun, Aliza, 81247 München (DE); Papagudi Subrahmanyam, Niranjana, 85540 Haar (DE); Passarelli, Anne, 80809 München (DE); Safieh, Malek, 81539 München (DE); Schneider, Daniel, 80796 München (DE)
(74) Representative: Siemens Patent Attorneys

(57) **Abstract**

The invention relates to a method of verifying integrity of a computing device (1) comprising a number of hardware device components (1), the method comprising the steps of: a) measuring (S1) a number of identifiers (30) of each of the hardware device components (10); and b) generating (S2) a dynamic bill of materials (3) from the number of measured identifiers (30), wherein steps a) and b) are performed by executing an application (21) comprised in a trusted code base (121) of the computing device (1).

The dynamic bill of materials generated by the application that is part of the trusted code base allows to verify the integrity of the hardware device components of the computing device in a trusted manner.

## Description

The present invention relates to the field of IT security, more particularly to the problem of ensuring integrity of computing hardware throughout global supply chains, and in particular to a method of verifying integrity of a computing device, and to a corresponding computing device.

It is desired to ensure the integrity of a computing device, such as an industrial computing device, that comprises a plurality of software and hardware components, throughout the supply chain leading from the device manufacturer to the customer.

A bill of materials (BOM) for a device is a list of hardware and/or software components that are included (physically or logically installed) in the device. A bill of materials may be created at a particular phase in the lifecycle of the device, such as at the time of manufacturing the device, and may be made available to the customer and other parties for later verification by direct distribution, by storing the bill of materials on the device, or by publishing the bill of materials on a server. Such a bill of materials is static data that the customer can use later-on to verify integrity of the device.

There are software solutions such as Rezilion, https://www.rezilion.com/platform/sca-dynamic-sbom, and Syft, https://github.com/anchore/syft that enumerate software components that are installed on a computing device to generate a dynamic bill of materials of software components.

The Linux Integrity Measurement Architecture, IMA, https://sourceforge.net/p/linux-ima/wiki/Home, collects file hashes, places them in kernel memory, where userland applications cannot access or modify them, and allows local or remote modules to verify the measured values, so as to detect whether executable files have been accidentally or maliciously altered.

The Intel Transparent Supply Chain Process (https://www.intel.com/content/www/us/en/products/docs/servers/transparent-supply-chain.html) and the Hewlett Packard Enterprise Trusted Supply Chain program (https://github.com/HewlettPackard/PCVT) are solutions that require that a device manufacturer stores information pertaining to the hardware components of the device within the device and provide the customer with userland tools to validate the stored information. The stored information pertains to one or more artifacts created within each device securely by binding the device's attributes to its identity using hardware roots of trust.

Secure boot is an industry standard for UEFI BIOS firmware in which a secure boot loader verifies digital signatures of any further software components to be booted, such as further firmware, operating system boot loaders and operating systems, and allow these software components to boot only if their respective digital signature is verified successfully. The public key that is used for signature verification may be stored in the device firmware, in a one-time programmable memory, or in a secure element (secure hardware element) such as a Trusted Platform Module, TPM or fTPM (firmware TPM). Thus, a device manufacturer can prescribe that the computing device be booted only with legitimate software components, and the consumer can benefit from protection against tampering with the software components by viruses, attackers, and the like.

In the light of this, it is one object of the present invention to provide for improved ways of ensuring the integrity of a computing device.

To solve the object, under a first aspect, there is proposed a method of verifying integrity of a computing device comprising a number of hardware device components, the method comprising the steps of: a) measuring a number of identifiers of each of the hardware device components; and b) generating a dynamic bill of materials from the number of measured identifiers, wherein steps a) and b) are performed by executing an application comprised in a trusted code base of the computing device.

Accordingly, a number of measurable identifiers of the hardware device components are enumerated and a dynamic bill of materials is generated by executing the application that is part of the trusted code base.

The trusted application is comprised in the trusted code base of the computing device. Accordingly, in particular, the trusted application is executed in a secure environment of the computing device.

By executing the application in a secure environment, advantageously, it may be possible to guarantee the runtime integrity of the application.

Herein, "secure environment" refers, in particular, to an execution environment that cannot be modified, or an execution environment that cannot be modified without possession of a cryptographic key owned by a trusted party, such as the device manufacturer, or at least an execution environment, modification of which is more difficult than tampering with one of the hardware device components. Means that safeguard the trusted code base and the secure environment formed by executing the trusted code base from unauthorized modifications may comprise hardware means, software means, cryptographic means, and any combination thereof.

For example, the trusted code base may be securely stored on the computing device.

Thus, the application executes in a trusted execution environment by virtue of the fact that trusted code base, which comprises the application and any further elements of the secure environment, is securely stored on the computing device.

The computing device may comprise at least one further execution environment for executing further applications. The at least one further execution environment may be called also rich execution environment or general execution environment.

In this case, the secure environment and the further execution environment are preferably isolated from each other based on hardware-based isolation, e.g. by using dedicate processing chips, or by using a hardware-based isolation within a processing chip.

Thus, advantageously, the method may be performed in a trusted manner. Furthermore, the dynamic bill of materials is based on actually measured identifiers of the hardware device components. Therefore, the dynamic bill of materials generated in this way can be trusted to reflect a true identity of the hardware device components of the computing device at the point in time when the method is performed.

By comparing the dynamic bill of materials that is generated by the application executing in the secure environment to a predefined static bill of materials supplied by the manufacturer of the computing device, it is advantageously possible to verify, with increased trust, the integrity of the computing device, i.e. whether or not any of the hardware device components have been tampered with, such as modified, removed, or added.

The term "a number of', as used herein, refers to a number of one or more, N ≥ 1.

"Measuring" may refer, in particular, to a process that comprises at least one of performing a physical measurement on the hardware device component using a sensor and performing a communication using signals transmitted between a processing unit of the computing device and the hardware device component.

The number of measured identifiers can constitute or comprise a hardware-bound fingerprint of the number of hardware device components of the computing device.

In particular, a "hardware device component" may refer to a component of the computing device that is not mere software, but is embodied, at least in part, in hardware. Examples include a pluggable expansion card, soldered circuitry, a memory chip, a processor chip, a network interface chip, and the like.

The generated dynamic bill of materials may be an output of the claimed method. The generated dynamic bill of materials may be used by further method steps that are executed on the computing device inside or outside the secure environment. Alternatively, the generated dynamic bill of materials may be communicated to an external server device for verification.

Here, and in the following, the term "securely stored on the computing device" may comprise any of the following meanings: The data, such as the trusted code base comprising the application, or the later-to-be described static predetermined bill of materials, or any other securely stored data, may be stored on the computing device such that even a malicious party that is able to replace hardware device components of the computing device is unable to modify the securely stored data, or may be stored on the computing device such that modifying the securely stored data is more difficult than modifying, replacing or forging hardware device components of the computing device, or may be stored on the computing device such that any modifications of the securely stored data can be detected.

Examples include the "securely stored" data being stored in a protected storage of the computing device that is safeguarded by hardware or cryptography. The protected storage may be, for example, a read-only memory, ROM, a one-time programmable memory, such as a PROM or an OTP fuse or eFuse, or may be a one-time programmable memory area, safeguarded by logical, hardware, or cryptographic means against reprogramming, of a reprogrammable memory, such as of a flash memory or an EPROM, or may be a smart secure element, such as a Trusted Platform Module, TPM, fTPM (firmware TPM), PTT (platform trust technology), a crypto controller, a security processor, a secure element, or any combination thereof, or the like. The protected storage is preferably hardwired (such as soldered onto the mainboard) in the computing device. Furthermore, more preferably, the protected storage is sealed such that unsoldering thereof is not possible or can at least not go unnoticed.

Alternatively, "securely stored" also comprises a situation in which the respective data is stored in a protected manner. For example, only a cryptographic hash of, or a digital signature of, the respective data is stored in the protected storage, and the respective data itself is stored in a lesser-protected or unprotected storage, such as in a reprogrammable memory, flash memory, or even on a hard drive or the like, of the computing device. As yet another alternative of "securely stored", also an encrypted cryptographic hash of, or a digital signature of, the data may be stored together with the data in the lesser-protected or unprotected storage, and only a cryptographic key for decrypting the encrypted cryptographic hash or for verifying authenticity of the digital signature may be securely stored in the protected storage. In the latter cases in which the bulk of the respective data is not stored in the protected storage, the method may include verifying the integrity of the data portions that are stored in the lesser-protected or unprotected storage using the portion of the data (the cryptographic hash, the digital signature, and the like) that is stored in the protected storage before using and trusting said data.

According to an embodiment, the application executes in a secure pre-boot execution environment.

That is, the secure environment may be a secure pre-boot execution environment.

More particularly, the application may be integrated into a so-called secure boot process. That is, an existing secure boot process that enumerates and validates software components and builds a dynamic bill of materials relating to software components for validation is advantageously extended to become a secure boot process that also enumerates hardware device components and builds a dynamic bill of materials relating to hardware device components for validation.

The secure pre-boot execution environment may be formed by executing the trusted code base.

In particular, the secure pre-boot execution environment may be formed by executing the trusted code base prior to booting the computing device, that is, in response to turning on the computing device, to performing a hard reset or soft reset of the computing device, and the like.

Thus, advantageously, the integrity of the computing device and its hardware device components may be verified prior to booting the computing device. Thus, advantageously, the integrity is verified before any operating system or userland code that could be spied on by a malicious hardware component can be executed on the computing device.

According to a further embodiment, the method further comprises c) comparing the dynamic bill of materials with a predefined static bill of materials.

The predefined static bill of materials may be generated at a time of manufacturing the computing device or may be generated at any other defined point in time, but preferably early-on, in the lifecycle of the computing device. The predefined static bill of materials may be generated by a manufacturer or by another trusted party in the supply chain of the computing device.

The predefined static bill of materials may be generated by the manufacturer of the computing device or other trusted party by executing the same application that will later-on generate the dynamic bill of materials. Alternatively, the predefined static bill of materials may be generated by the manufacturer or other trusted party by running a userland application that enumerates the installed hardware device components and generates a bill of materials or may be generated by the manufacturer logically based on logistics data that the manufacturer has about the hardware device components that he assembles into the computing device at the manufacturing site, for example.

By comparing the dynamic bill of materials with the predefined static bill of materials, the integrity of the computing device is verified. That is, it can be verified, whether the hardware device components currently present in the computing device correspond to the hardware device components that are specified in the predefined static bill of materials.

Thus, rather than, or in addition to, the dynamic bill of materials itself, an output of the claimed method may comprise a comparison result obtained in step c).

It is noted that in some variants, step c) is also performed by the application running in the secure environment. As such, a comparison result obtained by step c) may enjoy the same level of trust as the dynamic bill of materials. In other variants, step c) may be performed by an external device, such as an external server, to which the dynamic bill of materials can be transmitted in a secure manner.

According to a further embodiment, the method further comprises: d) booting an operating system of the computing device dependent on a comparison result obtained in step c).

In the present embodiment, steps c) and d) are performed by code (the application or a bootloader spawned thereby) running in the secure environment.

Thus, advantageously, the computing device may be prevented from booting, or a user may be warned, if the integrity verification failed and it is suspected that the hardware components of the computing device have been tampered with along the supply chain after leaving the manufacturer's premises.

"Booting dependent on a comparison result" may comprise booting the operating system of the computing device only if the comparison result obtained in step c) indicates a match between the dynamic bill of materials and the predefined static bill of materials.

"Booting dependent on a comparison result" may comprise not booting the operating system of the computing device and halting the computing device or putting the computing device into a service or maintenance mode if the comparison result obtained in c) indicates a mismatch between the dynamic bill of materials and the predefined static bill of materials.

"Booting dependent on a comparison result" may comprise displaying a warning message and prompting a user for confirmation and only booting the computing device following user confirmation if the comparison result obtained in step c) indicates a mismatch between the dynamic bill of materials and the predefined static bill of materials.

Herein, a "match" may refer to an exact match (identity, or identity of contents) of the bills of materials, but a "match" may also indicate a situation in which differences between the dynamic bill of materials and the static bill of materials are deemed to be legit. For example, the predefined static bill of materials could list a number of optional identifiers of optional hardware device components, and a match occurs also if one or more of the optional identifiers are missing from the dynamic bill of materials. This is, the "match" may be a logic, condition-based and/or wildcard-based match, and the like.

According to one preferred variant, step d) may comprise deriving and/or releasing a cryptographic key for decrypting an encrypted further code base of a further execution environment dependent on the comparison result in step d).

Therein, booting the operation system may comprise decrypting the encrypted further code base using the cryptographic key and executing the decrypted further code base.

In particular, the cryptographic key may only be derived and/or released, and the further code base may only be decrypted and executed, when the comparison result indicates a match.

Herein, the cryptographic key may be a firmware encryption key or the like.

By executing the further code base, a further execution environment may be formed in which the firmware of the computing device, the bootloader of the operating system of the computing device and/or the operating system itself of the computing device execute.

According to a further embodiment, a cryptographic hash of, or a cryptographic key for verifying a digital signature of the predefined static bill of materials is securely stored on the computing device.

The above-given examples of "securely stored", "protected storage" and the like also apply here.

Thus, even if the predefined static bill of material is stored in a lesser-protected storage of the device such that a malicious party can tamper with the predefined static bill of material, or even if the predefined static bill of material is obtained via network communications from another party, the method can comprise a step of verifying the integrity of the predefined static bill of material using the cryptographic hash or the cryptographic key that are securely stored, prior to using and trusting the predefined static bill of material in the comparison in step c).

Thus, advantageously, integrity of the predefined static bill of material is ensured, but there is no need for the entire predefined static bill of material to be stored in a protected storage.

The cryptographic hash may be a message digest according to the MD5 algorithm, SHA-1 algorithm, SHA-2 algorithm, SHA-3 algorithm, BLAKE3 algorithm, or the like. The cryptographic key may be a public key of the device manufacturer or another trusted party.

According to a further embodiment, the predefined static bill of materials is securely prestored on the computing device.

The above definitions of "securely stored" and "protected storage" that were given with respect to data such as the trusted code base also apply to "securely prestored" with respect to the predefined static bill of materials.

In this way, advantageously, the computing device is equipped with an immutable predefined static bill of materials that cannot be tampered with by a malicious third party (or modifications of which require at least more malicious effort than modifications of the hardware device components), and that can serve as a basis for comparison with the trusted dynamic bill of materials generated in step b) to detect potential malicious manipulations of one or more of the hardware device components.

According to a further embodiment, the method further comprises securely obtaining the predefined static bill of materials via network from an external server device, and/or the method further comprises securely transmitting the dynamic bill of materials to an external server device.

Herein, "securely obtaining" and/or "securely transmitting", in particular, may comprise using cryptography for encryption and/or integrity protection of the network communication between the computing device and the external server device. Therein, a cryptographic key involved in the secure communication, such as a public key and/or a private key of an asymmetric cryptographic key pair, may be securely stored on the computing device.

The external server may be provided by the device manufacturer or by another trusted party.

Thus, the device manufacturer may advantageously exert control over any modifications made to hardware device components inside the manufactured computing devices over their entire life cycle. The manufacturer also advantageously is able to amend the predefined static bill of material that is supplied by the external service device at a time when the manufactured device is already in the field, so as to allow for only legit hardware device component upgrades, while disallowing any unapproved hardware device component upgrades.

Advantageously, the predefined static bill of material itself need not be permanently stored on the computing device, so that it cannot be tampered with by virtue of its absence.

Securely transmitting the dynamic bill of materials to an external server device may advantageously constitute an act of self-certifying in which the computing device provides a verifiable proof that it comprises only legit hardware device components.

According to a further embodiment, at least one of the numbers of measured identifiers is measured by reading out information from a memory area of one of the hardware device components.

For example, the read-out information may comprise a serial number, a MAC address, calibration data and other data that lends itself as unique identifiers of the hardware device component.

According to a further embodiment, at least one of the numbers of measured identifiers is measured by measuring an intrinsic property of the respective hardware device component.

That is, the measurement may be an act of physically measuring properties, such as operating temperature, energy consumption, conductivity or the like of the hardware device component that occur in the hardware device component in response to a specific input and other specific conditions. Such physical properties may be difficult to replicate exactly when maliciously forging a hardware device component. As such, if the dynamic bill of materials is generated based on measurement of such intrinsic properties, it is made difficult to circumvent the detection of replacement of a legit hardware device component with a forged one.

According to a further embodiment, at least one of the numbers of measured identifiers is measured by performing a physical unclonable function of the hardware component.

A physical-unclonable function, PUF, is a physical object, such as a hardware structure, that, for a given input and conditions (challenge), provides a physically defined digital fingerprint as output that is a unique identifier of the hardware device component.

A PUF of a semiconductor device component may depend on the uniqueness of the semiconductor device's physical microstructure, which depends on random physical factors introduced during manufacturing and therefore cannot be easily cloned.

According to a further embodiment, at least one of the numbers of measured identifiers is measured by performing a cryptographic authentication of one of the hardware device components.

Credentials, such as certificates, cryptographic keys and the like that are required by the application to perform the cryptographic authentication of the hardware device component may be predefined in the application, may be securely stored in the computing device, or may be provided together with the predefined static bill of materials against which the to-be generated dynamic bill of materials is going to be compared. In this case, the measured identifier may comprise an integer or Boolean value indicating success or failure of the cryptographic authentication, or may comprise identification data read from the hardware device component after its authentication, or the like.

Any embodiment of the first aspect may be combined with any embodiment of the first aspect to obtain another embodiment of the first aspect.

According to a second aspect, there is proposed a computer program product comprising a program code for executing the method of the first aspect or any one of its embodiments when run on at least one computer.

In particular, the at least one computer comprises the computing device, the hardware device components of which are measured and enumerated in the generated dynamic bill of materials. In embodiments in which the predefined static bill of materials is securely obtained from an external server device and/or the dynamic bill of materials is securely transmitted to an external server device and/or the step of comparing the predefined static bill of materials with the dynamic bill of materials is executed by a device that is different from the computing device comprising the hardware device components, said external server device or other device is also comprised by the "at least one computer".

The computer program product may be embodied as program code stored in a one-time programmable memory or in a reprogrammable memory of the computing device. The computer program code may also be embodied program code that may be downloaded from a server in a network. For example, the program code may be loaded by an UEFI BIOS when the computing device is started by booting from the network, or the like.

The application mentioned in the first aspect is an example of the computer program product of the third aspect.

According to a third aspect, there is provided a computing device comprising: a number of hardware device components; and a trusted code base comprising an application, wherein the application is configured to: a) measure a number of identifiers of each of the hardware device components; and b) generate a dynamic bill of materials from the number of measured identifiers.

The embodiments, features and advantages described with reference to the method of the present invention apply mutatis mutandis to the computing device of the present invention.

According to a further embodiment, the application of the computing device is further configured with functions to: c) compare the dynamic bill of materials with a predefined static bill of materials; and d) boot an operating system of the computing device dependent on a comparison result obtained by function c).

Thus, the computing device is advantageously prevented from booting, or boots only after warning and obtaining confirmation from a user in case it is detected that at least one of the hardware device components of the computing device deviate from the specification contained in the predefined static bill of materials. Since the dynamic bill of materials is automatically generated by an application executing in a trusted execution elements and based on a measurement performed on the hardware device components, a malicious party trying to introduce a modified or forged hardware device component is prevented from easily doing so unnoticed.

According to a fourth aspect, there is proposed a system comprising the computing device of the third aspect or any one of its embodiments and an external server device, wherein the application is further configured to: e) securely transmit the dynamic bill of materials to an external server device; and the external server device is configured to: c) compare the dynamic bill of materials with a predefined static bill of materials.

Thus, advantageously, a device manufacturer, site operator or the like can provide a server device that receives the dynamic bills of materials that are securely transmitted by one or more computing devices in the field and can keep track of whether their configuration of installed hardware device components still complies with predefined specifications.

It is noted that throughout the present application, independent of the grammatical term usage of terms such as "user", "operator" etc., individuals with male, female or other gender identities are included within the term.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a combined structural/functional diagram of a computing device according to a first exemplary embodiment.
Fig. 2 visualizes steps of a method according to the first exemplary embodiment.
Fig. 3 shows a combined structural/functional diagram of a computing device according to a second exemplary embodiment.
Fig. 4 visualizes steps of a method according to the second exemplary embodiment.
Fig. 5 shows a combined structural/functional diagram of a computing device according to a third exemplary embodiment.
Fig. 6 visualizes steps of a method according to the third exemplary embodiment; and
Fig. 7 shows a combined structural/functional diagram of a system according to further variations.

In the Figures, like reference numerals designate like or functionally equivalent elements, unless otherwise indicated.

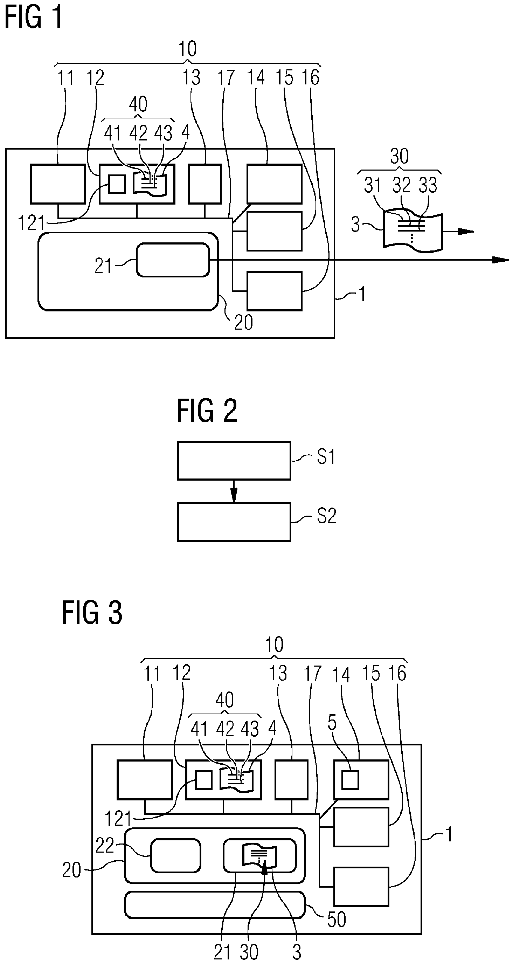

Fig. 1 shows a combined structural/functional diagram of an industrial computing device 1 according to a first exemplary embodiment; and Fig. 2 visualizes steps of a method according to the first exemplary embodiment.

Structurally, the industrial computing device 1 comprises a plurality of physical hardware device components 10. Without prejudice to generality, the plurality of physical hardware device components 10 may comprise a CPU 11, a protected storage 12, random-access memory 13, a mass storage 14, a sensor device 15, a pluggable extension card 16, and bus circuitry 17 interconnecting the CPU 11, the protected storage 12, the random-access memory 13, the mass storage 14, the sensor device 15 and the pluggable extension card 16. One or more or all of the hardware device components 10 may be soldered onto a motherboard of the industrial computing device 1. One or more or all of the hardware device components 10 may be plugged into the motherboard of the industrial computing device 1.

Without prejudice to generality, the protected storage 12 may be, for example, a one-time programmable memory, such as a ROM, a PROM or an OTP fuse or eFuse, or may be a one-time programmable memory area, safeguarded by logical, hardware, or cryptographic means against reprogramming, of a reprogrammable memory, such as of a flash memory or an EPROM, or may be a smart secure element, such as a Trusted Platform Module, TPM, fTPM, PTT, or the like. The protected storage 12 may also comprise a combination of two or more of the cited example devices, such as, for example, a flash EPROM and a TPM storing keys that control acceptance or rejection of reprogramming the flash EPROM, and the like. The protected storage 12 is preferably hardwired (such as soldered onto the motherboard) in the computing device 10. Furthermore, more preferably, the protected storage 12 is sealed such that unsoldering thereof is not possible or can at least not go unnoticed.

Functionally, when the industrial computing device 1 is powered on, its CPU 11 starts to execute a trusted code base 121 that is securely stored in the protected storage 12, and thereby forms a secure environment 20.

According to the present exemplary embodiment, the secure environment 20 that is formed when the CPU 11 executes the trusted code base 121 comprises a measurement application 21 installed therein. The measurement application 21 is an example for a computer program product according to the present exemplary embodiment. The measurement application 21, when executed by the CPU 11, performs the steps of the method that are visualized in Fig. 2.

Fig. 2 visualizes steps of a method according to the first exemplary embodiment. Reference is made to Fig. 1 and Fig. 2.

In step S1, the measurement application 21 enumerates a number of one or more of the physical hardware device components 10, and measures, for each of the number of one or more of the physical hardware device components 10, one or more identifiers 30 of the respective hardware device component 10.

In particular, and without prejudice to generality, measuring an identifier 30 of one of the hardware device components 10 may comprise any one or more of the following types of measurements:
The measurement application 21 may read out information, such as a serial number, a MAC address, calibration, and other data, from a memory area of the hardware device component 10 via the bus 17. The read-out information may be used as the measured identifier 30 as is, or - so as to reduce the amount of data - a cryptographic hash value or a fingerprint value may be generated from the read-out information and may be used as the measured identifier 30.

The measurement application 10 may also cause the CPU 11 and/or further control circuitry to perform a measurement of an intrinsic property of the hardware device component 10. Herein, the hardware device component 10 may be put under certain predefined conditions, such as, for example, a predefined processing load or a predefined fixed power supply level or a predefined fixed clock frequency, etc., and may be supplied with a predefined input or a predefined test input signal. After that, the measurement may be performed by reading an output of the hardware device component 10 in response to the predefined conditions and the predefined input. Alternatively, a non-shown sensor, such as a temperature sensor, a voltage sensor, a power meter, or the like, may be used to measure an intrinsic physical property of the hardware device component 10, such as temperature, voltage drop, or power consumption, that occurs in response to the predefined conditions and the predefined input or predefined test input signal.

The measurement application 10 may also cause the CPU 11 and/or further control circuitry to perform a physical unclonable function (PUF) of the hardware component 10 and use the physically defined digital fingerprint provided by the PUF in response to predefined conditions and predefined input as the measured identifier 30.

The measurement application 10 may also use credentials stored in the protected storage 12 and/or obtained by the measurement application 10 from a predefined static bill of materials (to be described later) to perform a cryptographic authentication of the hardware device components 10 and use a result of the cryptographic authentication or an identifier read from the hardware device component 10 after authentication as the measured identifier 30.

It is noted that for different ones of the number of hardware components 10 same or different ones or a same plurality or different pluralities of the above-described measuring techniques can be used.

The one or more measured identifiers 30, 31-33 collected in this way for each of the number of the hardware device components 10 may be regarded as constituting a hardware-bound fingerprint of the computing device 1 and the hardware device components 10 installed therein.

It is noted that not all of the hardware device components 10, 11-17 of the computing devices 1 need to be enumerated and included into the hardware-bound fingerprint contained in the dynamic bill of materials 3, and it suffices if at least one or more of the hardware device components 10 of the computing device 1 are measured and included in the dynamic BOM 3.

In step S2, the measurement application 21 generates a dynamic bill of materials 3 from the measured identifiers 30. That is, the dynamic bill of materials 3 may be a structured text file or a binary file that comprises, a textual or binary representation corresponding to the measured identifiers 30, 31-33.

The dynamic bill of materials 3 created in this way may be regarded as functional data that has a technical effect in the sense that the dynamic bill of materials 3 can be compared to a predefined static bill of materials (not shown in Fig. 1) so as to ensure that all hardware device components 10 of the computing device 1 are genuine and have not been tampered with along the supply chain of the computing device 1. The predefined static bill of materials may be provided by a manufacturer of the computing device 1 or another trusted party involved in the supply chain of the computing device 1. More particularly, since the dynamic bill of materials 3 is generated by measuring the actually installed hardware device components 10, and is generated by measurement application 21 that runs in a secure environment 20 which is formed by executing the trusted code base 121 stored in a protected storage 3, the dynamic bill of materials 3 can be trusted, because, advantageously, a malicious party cannot, or is substantially impeded in, tampering with the generation of the dynamic bill of materials 3 without such tampering being noticed.

Various locations of performing the identity verification using the dynamic bill of materials 3 are conceivable. Thus, the trusted dynamic bill of materials 3 generated in this way can be used by the measurement application 21 or other code in the secure environment 20 to perform the identity verification as part of a secure boot process. The trusted dynamic bill of materials 3 can be communicated, by the measurement application 21 or other code in the secure environment 20, over network to an external server device (not shown) to have the external server device perform the identity verification or can be referred to by userland code that is executing on the computing device 10 after an operating system thereof has booted and that performs the identity verification.

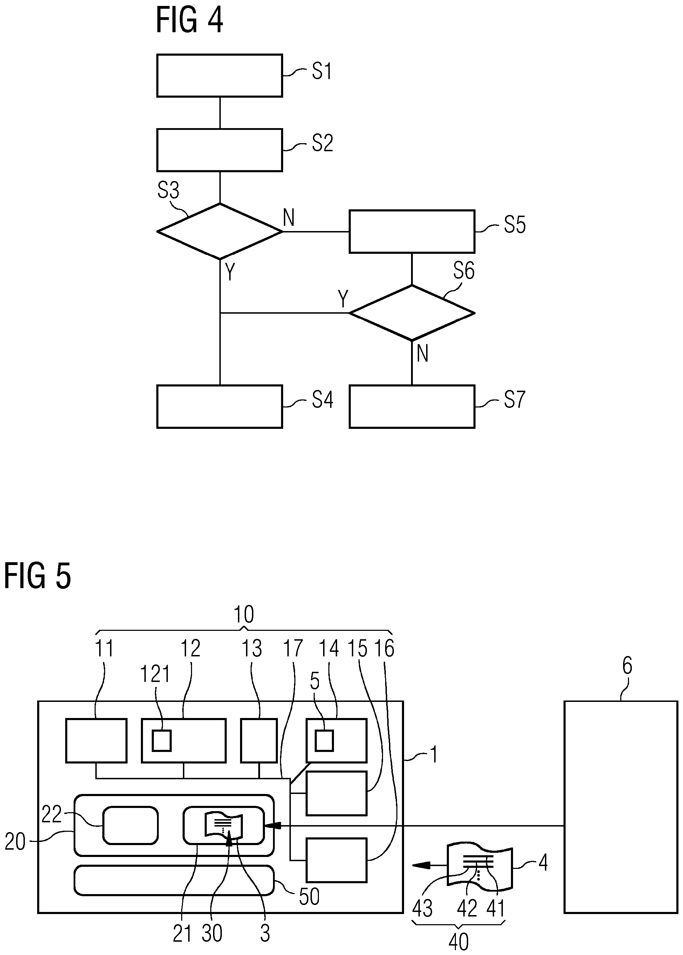

Fig. 3 shows a combined structural/functional diagram of an industrial computing device according to a second exemplary embodiment; and Fig. 4 visualizes steps of a method according to the second exemplary embodiment. Reference is made to Fig. 3 and Fig. 4.

The second exemplary embodiment is based on the first exemplary embodiment and extends the first exemplary embodiment. The description focusses on the differences and extensions.

According to the second exemplary embodiment, a manufacturer or other trusted party that is involved in the supply chain of the computing device 1 generates a predefined static bill of materials 4 of the computing device 1. The predefined static bill of materials 4 comprises a number of identifiers 40 that of the hardware device components 10 that were installed by the manufacturer and/or that the manufacturer requires or prescribes or allows to be installed in the computing device 1. The manufacturer or other trusted party securely pre-stores the predefined static bill of materials 4 on the computing device 1. That is, the predefined static bill of materials 4 may be stored in the protected storage 12. Alternative, the predefined static bill of materials 4 may be stored on mass storage 14 or may be obtained via network from an external server device. In any of the latter cases, a cryptographic hash value or a cryptographic key for verifying integrity of the predefined static bill of materials 4 may be stored in the protected storage 12.

According to the second exemplary embodiment, the secure environment 20 is a secure pre-boot execution environment that is started upon turning on the computing device 1 prior to executing any other code. The secure pre-boot execution environment 20 comprises a boot loader 22 in addition to the measurement application 21. Furthermore, according to the second exemplary embodiment, the mass storage 14 stores an operating system image 5.

The measurement application 21, after having performed steps S1 and S2 of measuring the identifiers 30 and generating the dynamic bill of materials 3, proceeds to step S3. In step S3, the measurement application 21 compares the predefined static bill of materials 4 to the generated dynamic bill of materials 3 and determines a comparison result indicating whether the generated dynamic bill of materials 3 matches the predefined static bill of materials 4. Therein, in one example, each identifier 40 comprised in the predefined static bill of materials 4 is compared to the corresponding identifier 30 comprised in the dynamic bill of materials 3 (direct, one-by-one comparison).

It is noted that according to another example, the predefined static bill of materials 4 may also comprise a number of logical conditions in addition to the number of identifiers 40. The logical conditions may specify which of the identifiers 40 are necessary (must be matched to corresponding identifiers 30 in the dynamic bill of materials 3) and which are optional, may specify lists of allowed or lists of forbidden identifiers 40, may specify lists of mutually exclusive identifiers 40, and the like. In this case, a match is only identified in step S3 when all such logical conditions specified in the predefined static bill of materials 4 are met by the identifiers 30 of the dynamic bill of materials 3. Such a comparison may be referred to as a wildcard-based or condition-based comparison.

If the comparison result indicates a match ("Y" at S3), the measurement application 21 proceeds to step S4, in which the measurement application 21 spawns the boot loader 22. The boot loader 22 then reads an operating system image 5 stored on the mass storage 14 and executes the read operating system image 5 so as to boot and execute the operating system 50 of the computing device 1.

However, if no match is determined ("N" at S3), the measurement application 21 proceeds to step S5. In step S5, a warning message is displayed to a user of the computing device 1. The warning message indicates that the predefined static bill of material 4 does not match the generated dynamic bill of materials 3, i.e., that the hardware components 10 of the computing device 1 may have been tampered with.

After that, the measurement application 21 proceeds to step S6 in which the user is prompted whether the user wants to continue with booting the operating system 50. If the user answers in the affirmative ("Y" at S6), the measurement application 21 proceeds to the above-described step S5 and causes the boot loader 22 to boot the operating system 50. Otherwise ("N" at S6), the measurement application 21 proceeds to step S7 and halts execution or puts the computing device 1 into a maintenance mode.

It is noted that steps S5 and S6 are optional, and the measurement application 21 may also proceed directly from "N" at S3 to step S7.

Thus, advantageously, booting of the operating system 50 and putting the computing device 1 into regular operation can be prevented if, based on the generated dynamic bill of materials 3, is determined that the computing device 1 has been tampered with during throughout the supply chain in a manner that is deemed to be illegit by the manufacturer or other trusted party.

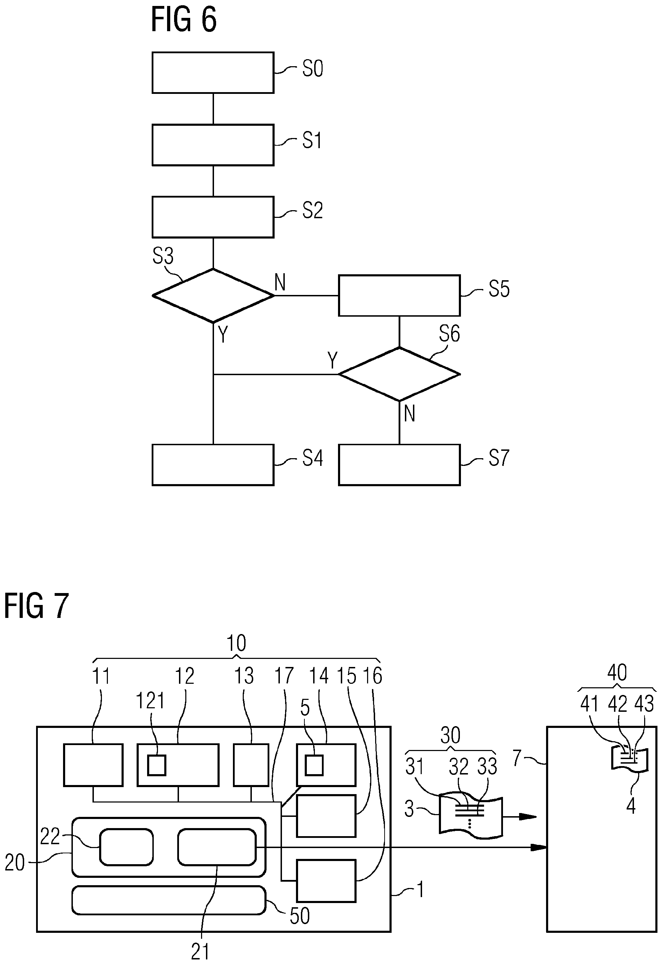

Fig. 5 shows a combined structural/functional diagram of an industrial computing device according to a second exemplary embodiment; and Fig. 6 visualizes steps of a method according to the second exemplary embodiment. Reference is made to Fig. 5 and Fig. 6.

The third exemplary embodiment is based on the first and second exemplary embodiments. The description focusses on the differences to the first and second exemplary embodiments.

According to the third exemplary embodiment, a manufacturer or other trusted party that is involved in the supply chain of the computing device 1 maintains a predefined static bill of materials 4 of the computing device 1 on an external server device 6. The predefined static bill of materials 4 is similar to the predefined static bill of materials 4 described for the second exemplary embodiment.

According to the third exemplary embodiment, similar to the second exemplary embodiment, the secure environment 20 is a secure pre-boot execution environment and comprises a boot loader 22 in addition to the measurement application 21, and the mass storage 14 stores an operating system image 5.

The measurement application 21 performs an initial step S0, in which the measurement application 21 securely obtains, via network, the predefined static bill of materials 4 from the external server device 6. Credentials and cryptographic keys required for the secure communication with the external server device 6 may be hardcoded in the measurement application 21 or may be stored in the protected storage 12 of the computing device 1.

Then, after having performed steps S1 and S2 of measuring the identifiers 30 and generating the dynamic bill of materials 3, the measurement application 21 proceeds with the first steps S3 to S7 in the same way as described for the second exemplary embodiment.

The third exemplary embodiment has the additional advantage that the manufacturer can change the predefined static bill of materials 4 when the computing device 1 is already in the field. In this way, the manufacturer of the computing device 1 may keep on-going control about which hardware device components 10 may be installed later-on during an upgrade procedure or the of the computing device 1 in the field. When a new hardware device component 10 appears on the market and is certified by device manufacturer, the manufacturer can include conditions specifying the new hardware device component 10 as an optional upgrade component into the predefined static bill of materials 4 maintained on the external server device 6.

Thus, advantageously, booting of the operating system 5 and putting the computing device 1 into regular operation can be allowed only if all hardware device components 10 of the computing device 1, which may comprise pre-installed hardware device components 10 as well as device hardware components 10 that are post-installed during upgrade, are deemed to be legit by the device manufacturer.

Although the present invention has been described in accordance with preferred embodiments, it is obvious for the person skilled in the art that modifications are possible in all embodiments.

The second exemplary embodiment describes that the predefined static bill of materials 4 is stored in the protected storage 12 of the computing device 1. The third exemplary embodiment describes that the predefined static bill of materials 4 is securely obtained from an external server device 6 by the measurement application 21. In both exemplary embodiments, the measurement application 21 then compares the predefined static bill of materials 4 to the generated dynamic bill of materials 3 and calls the boot loader 22 to boot the operating system 50 only if a match is found. However, alternatively, in each of the described exemplary embodiments, other processes apart from such conditional booting the operating system 5 are also envisaged after creating the dynamic bill of materials 3, as discussed below.

Fig. 7 shows a diagram of a system 100 according to a variation of the exemplary embodiments. As shown in Fig. 7, the dynamic bill of materials 3 may be transmitted to a further external server device 7 that is run by a site operator. The further external server 7 device may then compare the dynamic bill of materials 3 with a predefined static bill of materials 4 that may be stored on the further external server device 7 run by the site operator or that may be obtained from the external server device 6 (Fig. 5) maintained by the manufacturer. Dependent on a comparison result, the further external server device 7 may then alert a site operator to any potential illegit tampering with the computing device 1, cause automated decommissioning of the computing device 1, remove an authorization of computing device 1 to access network services, or the like. Alternatively, the comparison may be made by the measurement application 21 as described for the second and third exemplary embodiments, but rather than or in addition to booting the operating system 5 dependent on the comparison result, the comparison result may be transmitted to the further external server device 7, which then alerts the site operator dependent on the received comparison result and optionally takes further action as described above. All such network transmissions and receptions may be performed in a trusted manner using, on the side of the computing device 1, corresponding credentials and/or cryptographic keys stored in the protected storage 12. It is noted that if comparison of the predefined static bill of materials 4 and the dynamic bill of materials 3 is performed on any of the mentioned external server devices 6, 7, there is no need for the predefined static bill of materials 4 to be stored on, or to be transmitted to, the computing device 1 at all, thereby further safeguarding the predefined static bill of materials 4 from any attempts at illegit tampering.

In any of the second and third exemplary embodiments or the described and contemplated variations thereof, an additional step of creating a dynamic bill of materials of software components of the operating system image 5 and an additional step of comparing the dynamic bill of materials of software components of the operating system image 5 with a static predefined bill of materials of allowable software components may be performed. The operating system 50 may be booted only if both the software bills of materials and the hardware bills of materials 3, 4 match. In this way, advantageously, a "secure boot" mechanism that makes booting of an operating system 5 dependent on successful verification of a dynamically generated BOM 3 comprising a hardware-bound fingerprint of the hardware in addition to successful verification of a dynamically generated software BOM can be provided. Such a secure boot mechanism extending to both software and hardware can advantageously provide not only for counterfeit detection of devices or device components along an insecure supply chain, but also for protection against execution of maliciously modified software, operating system 50, and the like on the computing device 1. By only allowing legit operating systems 5 in this manner, an additional layer of protection against tampering with the predefined static bill of materials 4 and/or the trusted code base 121 stored in the protected storage 12 can be provided.

In the second and third exemplary environment, the operating system image 5 is stored on the mass storage 14. However, the operating system image 5 could also be stored on an external server device, and the bootloader 22, if it is called following identity verification of the hardware device components 10, could obtain the operating system image 5 via network by performing a network boot operation, such as for example, according to one or more of the BOOTP (Bootstrap Protocol), DHCP (Dynamic Host Configuration Protocol), TFTP (Trivial File Transfer Protocol), PXE (Preboot execution Environment), UEFI HTTP (Universal Extensible Firmware Interface Hypertext Transfer Protocol) Boot protocols, and the like.

In all exemplary embodiments, various data, such as the trusted code base 121, and in some exemplary embodiments also the predefined static bill of materials 4, was described as being securely stored on the computing device 1 by virtue of said data being stored in the protected storage 12. Consequently, in the figures, such data is shown inside the protected storage 12. However, other means of securely storing or securely pre-storing such data on the computing device 1 are conceivable. As such, the respective data could also be stored in a lesser-protected or unprotected storage, such as on the mass storage 14, or could even be received via network. In this case, the protected storage 12 may store not the data itself, but may store a cryptographic hash of said data, a digital signature of said data, or a cryptographic key for decrypting an encrypted cryptographic hash that is stored in association with said data, or a cryptographic key for verifying authenticity of a digital signature that is stored in association with said data. In this case, the methods of the exemplary embodiments may comprise a step of verifying the integrity of said data (trusted code base 121 and/or predefined static bill of materials 4) using the cryptographic hash or cryptographic key prior stored in the protected storage 12 prior to using said data in any further steps.

In all the described exemplary embodiments and variations, the trusted code base 121 is securely stored on the computing device 1. However, it is also conceivable that only a network pre-boot loader is stored in the protected storage 12, such as in a boot ROM, of the computing device 1. The network pre-boot loader is executed when the computing device 1 starts and obtains the trusted code base, and optionally also the predefined static bill of materials 4, by performing a secure network pre-boot operation from an external server device. The secure environment 20 comprising the measurement application 21 and bootloader 22 would then be formed by executing the trusted code base obtained during the secure network pre-boot operation. The bootloader 22, if it is spawned following successful validation of the generated dynamic bill of materials 3, could then obtain the operating system 5 from mass storage 14 or via a network boot operation from the external service device, etc.

The use of the dynamically and securely generated bills of materials 3 of the hardware device components 10 is not limited to deciding whether or not to boot an operating system 50 during a secure boot process, and further uses are also contemplated. As such, the measurement application 21 could digitally sign the dynamic bill of materials 3 using a private key stored in the protected storage 12 (such as TPM, ROM, and the like) and keep the signed dynamic bill of materials 3 in RAM 13. The operating system 50 or a userland application executing therein can then, later-on, while the computing device 1 continues to operate, use the digitally signed dynamic bill of materials 3 that is held in RAM 13 of the computing device 1 as a certificate to certify authenticity of its hardware device components 10 with a network communication partner as and when such a kind of certification of hardware authenticity is required.

## Claims

1. A method of verifying integrity of a computing device (1) comprising a number of hardware device components (1), the method comprising the steps of:
a) measuring (S1) a number of identifiers (30) of each of the hardware device components (10); and
b) generating (S2) a dynamic bill of materials (3) from the number of measured identifiers (30), wherein steps a) and b) are performed by executing an application (21) comprised in a trusted code base (121) of the computing device (1).

2. The method according to claim 1,
wherein the application executes in a secure pre-boot execution environment (20) of the computing device.

3. The method according to claim 1 or 2,
further comprising:
c) comparing (S3) the dynamic bill of materials (3) with a predefined static bill of materials (4).

4. The method according to claim 3,
further comprising:
d) booting (S4) an operating system (50) of the computing device (1) dependent on a comparison result obtained in step c).

5. The method according to claim 3 or 4,
wherein a cryptographic hash of, or a cryptographic key for verifying a digital signature of the predefined static bill of materials (4) is securely stored on the computing device (1).

6. The method according one of claims 3 to 5,
wherein the predefined static bill of materials (4) is securely prestored on the computing device (1).

7. The method according to one of claims 3 to 5,
further comprising securely obtaining (S0) the predefined static bill of materials (4) via a network from an external server device (6).

8. The method according to one of claims 1 to 7,
further comprising:
e) securely transmitting the dynamic bill of materials (3) to an external server device.

9. The method according to one of claims 1 to 8,
wherein at least one of the numbers of measured identifiers (30) is measured by reading out information from a memory area of one of the hardware device components (10).

10. The method according to one of claims 1 to 9,
wherein at least one of the numbers of measured identifiers (30) is measured by measuring an intrinsic property of one of the hardware device components (10) and/or by performing a physical unclonable function of one of the hardware device components (10).

11. The method according to one of claims 1 to 10,
wherein at least one of the numbers of measured identifiers (30) is measured by performing a cryptographic authentication of one of the hardware device components (10).

12. A computer program product comprising a program code for executing the method of one of claims 1 to 11 when run on at least one computer (1).

13. A computing device (1) comprising:
- a number of hardware device components (10);
- a trusted code base (121) comprising an application (21);
wherein the application (21) is configured to:
a) measure a number of identifiers (30) of each of the hardware device components (10); and
b) generate a dynamic bill of materials (3) from the number of measured identifiers (30).

14. The computing device according to claim 13,
wherein the application (21) is further configured with functions to:
c) compare the dynamic bill of materials (3) with a predefined static bill of materials (4); and
d) boot an operating system (50) of the computing device (1) dependent on a comparison result obtained by function c).

15. A system (100) comprising the computing device of claim 13 or 14 and an external server device (7),
wherein the application (21) is further configured to:
e) securely transmit the dynamic bill of materials (3) to an external server device (7); and
the external server device (7) is configured to:
c) compare the dynamic bill of materials (3) with a predefined static bill of materials (4).
